# EUROPEAN PATENT APPLICATION

(11) **EP 4 772 958 A1**
(43) Date of publication of application: **08.07.2026**
(21) Application number: 24860172.6
(22) Date of filing: 16.07.2024
(51) Int. Cl.: G06F 1/16, G06F 3/01

(54) **ELECTRONIC DEVICE COMPRISING HOUSING HAVING PROTRUDING AREA**

(30) Priority: 31.08.2023 KR 20230115091; 23.10.2023 KR 20230142071
(71) Applicant: Samsung Electronics Co., Ltd., Suwon-si, Gyeonggi-do 16677 (KR)
(72) Inventor: KIM, Kyungbin, Suwon-si, Gyeonggi-do 16677 (KR); KIM, Hyungjin, Suwon-si, Gyeonggi-do 16677 (KR); LEE, Yoondo, Suwon-si, Gyeonggi-do 16677 (KR); CHOE, Jaewon, Suwon-si, Gyeonggi-do 16677 (KR); KIM, Dahye, Suwon-si, Gyeonggi-do 16677 (KR); SIN, Yuri, Suwon-si, Gyeonggi-do 16677 (KR); CHUN, Jaebong, Suwon-si, Gyeonggi-do 16677 (KR)
(74) Representative: HGF
(86) International application number: PCT/KR2024/010180
(87) International publication number: WO 2025/048251

(57) **Abstract**

This electronic device may include: a housing having an annular structure and comprising a conductive material; and a substrate arranged to face the inner circumferential surface of the housing spaced apart from the inner circumferential surface of the housing. The housing may include a protruding area formed to protrude toward the substrate and electrically connected to the substrate. Various other embodiments are possible.

## Description

### TECHNICAL FIELD

Various embodiments in the present disclosure relate to an electronic device including a housing provided with a protruding area.

### BACKGROUND ART

With the advancement of wireless communication technology, electronic devices utilizing wireless communication are becoming more widely used. Since the commercialization of communication systems for wireless communication devices, wireless communication technology has been utilized and developed in various fields. The wireless communication devices may be electronic devices that users may carry, such as smartphones, or wearable devices that users may wear and use.

However, the foregoing should not be construed as having been acknowledged by the applicant as a prior art to the description set forth in the disclosure, but should be construed only as a related art to the invention described herein.

### DISCLOSURE OF THE INVENTION

### TECHNICAL SOLUTIONS

An electronic device according to an example embodiment may include: a housing having an annular structure comprising a conductive material, and a substrate spaced apart from and facing an inner circumferential surface of the housing. In an example embodiment, the housing may include a protruding area protruding toward the substrate and electrically connected to the substrate.

In addition, an electronic device according to an example embodiment may include a housing comprising a conductive material, and a substrate spaced apart from the housing, and a molding member filled between the housing and the substrate. In an example embodiment, the housing may include a protruding area protruding toward the substrate by penetrating the molding member and electrically connected to the substrate.

### BRIEF DESCRIPTION OF DRAWINGS

FIG. 1 is a block diagram of an example electronic device in a network environment according to various example embodiments.
FIG. 2 is a block diagram of an antenna module of an electronic device according to various example embodiments.
FIG. 3A is a perspective view of an electronic device according to an example embodiment.
FIG. 3B is a perspective view of an electronic device according to an example embodiment.
FIG. 3C is a schematic view illustrating a cross-section of an electronic device according to an example embodiment.
FIG. 4A is an exploded perspective view of an electronic device according to an example embodiment.
FIG. 4B is a cross-sectional view of an electronic device according to an example embodiment.
FIG. 5A is an exploded perspective view of an electronic device according to an example embodiment.
FIG. 5B is a cross-sectional view of an electronic device according to an example embodiment.
FIG. 6A is a perspective view of an electronic device according to an example embodiment.
FIG. 6B is a cross-sectional view of an electronic device according to an example embodiment.
FIG. 7A is an exploded perspective view of an electronic device according to an example embodiment.
FIG. 7B is a cross-sectional view of an electronic device according to an example embodiment.
FIG. 8A is an exploded perspective view of an electronic device according to an example embodiment.
FIG. 8B is a cross-sectional view of an electronic device according to an example embodiment.

### BEST MODE FOR CARRYING OUT THE INVENTION

Hereinafter, embodiments are described in detail with reference to the accompanying drawings. When describing the embodiments with reference to the accompanying drawings, like reference numerals refer to like elements, and a repeated description related thereto may not be repeated.

It should be appreciated that various embodiments of the disclosure and the terms used therein are not intended to limit the technical features set forth herein to particular embodiments and include various changes, equivalents, or replacements for a corresponding embodiment. With regard to the description of the drawings, similar reference numerals may be used to refer to similar or related elements. The singular form of a noun corresponding to an item may include one or more of the items, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. As used herein, such terms as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments may be implemented as software (e.g., a program 120) including one or more instructions that are stored in a storage medium (e.g., internal memory 136 or external memory 138) that is readable by a machine (e.g., an electronic device). For example, a processor of the machine (e.g., the electronic device) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore ^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

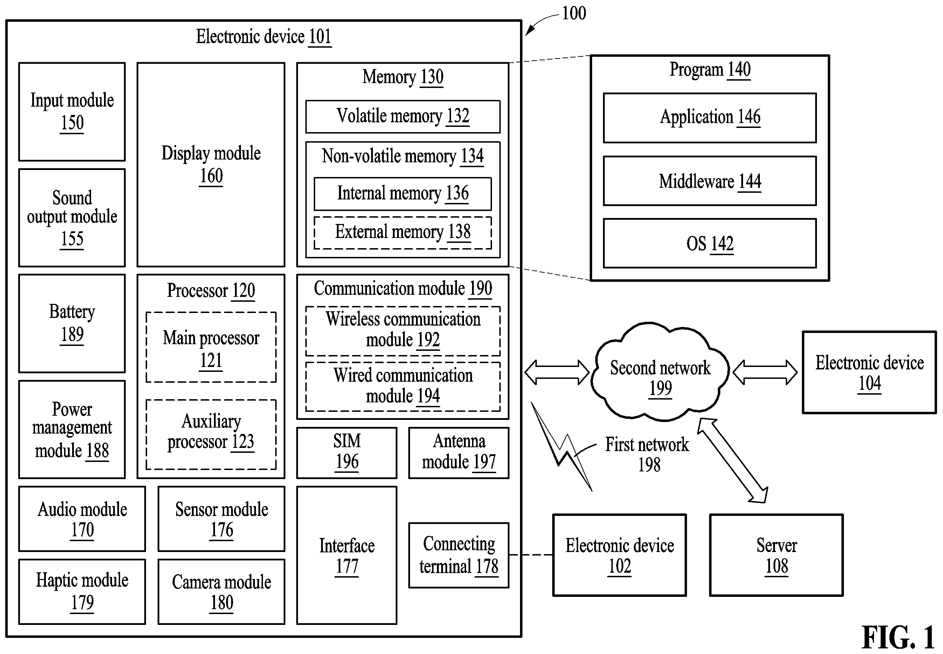

FIG. 1 is a block diagram illustrating an example electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one (e.g., the connecting terminal 178) of the above components may be omitted from the electronic device 101, or one or more other components may be added to the electronic device 101. In various examples, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least part of data the processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121 or to be dedicated for a designated function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence (AI) model processing. An AI model may be generated through machine learning. Such learning may be performed, e.g., by the electronic device 101 where the AI model is executed or via a separate server (e.g., the server 108). Learning algorithms may include, but are not limited to, e.g., supervised learning, unsupervised learning, semi-supervised learning, or reinforcement learning. The AI model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof, but is not limited thereto. The AI model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as a portion of the antenna module 197.

According to various embodiments, the antenna module 197 may form a mmWave antenna module. According to an embodiment, the mmWave antenna module may include a PCB, an RFIC disposed on a first mixing surface (e.g., a bottom surface) of the PCB or adjacent to the first mixing surface and capable of supporting a designated a high-frequency band (e.g., the mmWave band), and a plurality of antennas (e.g., array antennas) disposed on a second mixing surface (e.g., a top or a side surface) of the PCB, or adjacent to the second mixing surface and capable of transmitting or receiving signals of the designated high-frequency band.

At least some of the components described above may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed by the electronic device 101 may be executed by one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and may transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra-low-latency services using, e.g., distributed computing or MEC. In an embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic device may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

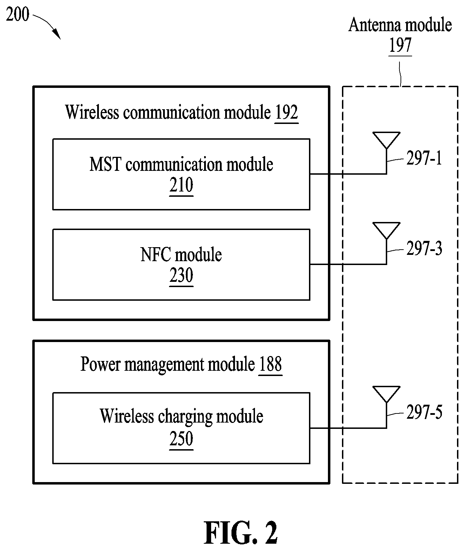

FIG. 2 is a block diagram 200 of the wireless communication module 192, the power management module 188, and the antenna module 197 of an electronic device according to various example embodiments.

Referring to FIG. 2, the wireless communication module 192 may include a magnetic secure transmission (MST) communication module 210 or a near-field communication (NFC) module 230, and the power management module 188 may include a wireless charging module 250. In this case, the antenna module 197 may include a plurality of antennas including an MST antenna 297-1 connected to the MST communication module 210, an NFC antenna 297-3 connected to the NFC module 230, and a wireless charging antenna 297-5 connected to the wireless charging module 250. For ease of description, the same components as those described with reference to FIG. 1 are briefly described or omitted from the description.

The MST communication module 210 may receive a signal including control information or payment information such as card information from the processor 120, generate a magnetic signal corresponding to the received signal via the MST antenna 297-1, and then transmit the generated magnetic signal to the external electronic device 102 (e.g., a point-of-sale (POS) device). In order to generate the magnetic signal, according to an embodiment, the MST communication module 210 may include a switching module (not shown) that includes one or more switches connected to the MST antenna 297-1 and control the switching module to change a direction of a voltage or a current supplied to the MST antenna 297-1 according to the received signal. The change of the direction of the voltage or the current allows the direction of the magnetic signal (e.g., a magnetic field) transmitted via the MST antenna 297-1 to change accordingly. When detected by the external electronic device 102, the magnetic signal with its direction changing may cause an effect (e.g., a waveform) similar to that of a magnetic field that is generated when a magnetic card corresponding to the received signal (e.g., card information) is swiped through a card reader of the electronic device 102. According to an embodiment, for example, payment-related information and a control signal that are received by the electronic device 102 in the form of the magnetic signal may be transmitted to an external server 108 (e.g., a payment server) via a second network 199.

The NFC module 230 may obtain a signal including control information or payment information such as card information from the processor 120 and transmit the obtained signal to the external electronic device 102 via the NFC antenna 297-3. According to an embodiment, the NFC module 230 may receive such a signal transmitted from the external electronic device 102 via the NFC antenna 297-3.

The wireless charging module 250 may wirelessly transmit power to the external electronic device 102 (e.g., a cellular phone or a wearable device) via the wireless charging antenna 297-5 or wirelessly receive power from the external electronic device 102 (e.g., a wireless charging device). The wireless charging module 250 may support one or more of various wireless charging schemes including, for example, a magnetic resonance scheme or a magnetic induction scheme.

According to an embodiment, some of the MST antenna 297-1, the NFC antenna 297-3, or the wireless charging antenna 297-5 may share at least a portion of radiators. For example, a radiator of the MST antenna 297-1 may be used as a radiator of the NFC antenna 297-3 or the wireless charging antenna 297-5, or vice versa. In such a case, the antenna module 297 may include a switching circuit (not shown) adapted to selectively connect (e.g., close) or disconnect (e.g., open) at least some of the antennas 297-1, 297-3, or 297-3 under the control of the wireless communication module 192 (e.g., the MST communication module 210 or the NFC module 230) or the power management module 188 (e.g., the wireless charging module 250). For example, when the electronic device 101 uses a wireless charging function, the NFC module 230 or the wireless charging module 250 may control the switching circuit to temporarily disconnect at least a partial area of the radiator shared by the NFC antenna 297-3 and the wireless charging antenna 297-5 from the NFC antenna 297-3 and to connect the at least one portion thereof to the wireless charging antenna 297-5.

According to an embodiment, at least one function of the MST communication module 210, the NFC module 230, or the wireless charging module 250 may be controlled by an external processor (e.g., the processor 120). According to an embodiment, a designated function (e.g., a payment function) of the MST communication module 210 or the NFC module 230 may be performed in a trusted execution environment (TEE). The TEE according to various embodiments may form an execution environment in which, for example, at least a partially designated area of memory 130 is allocated to be used for performing a function (e.g., a financial transaction or personal information-related function) that requires a relatively high level of security. In such a case, access to the designated area may be restrictively permitted, for example, according to an entity accessing thereto or an application being executed in the TEE.

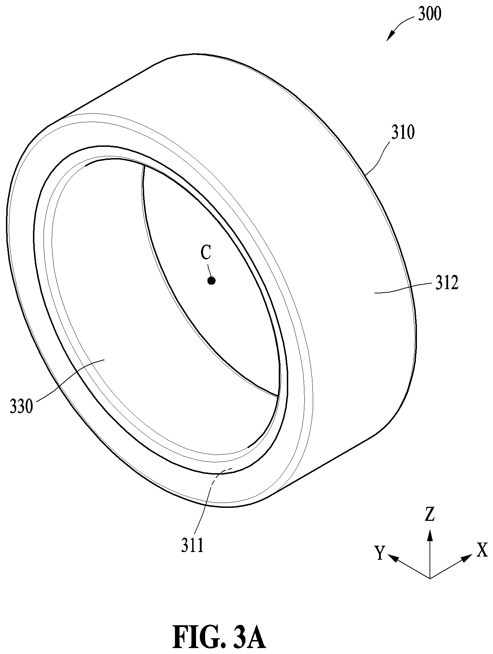

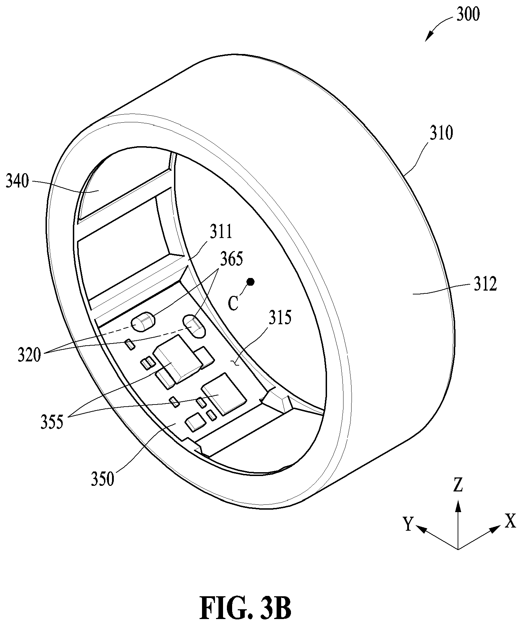

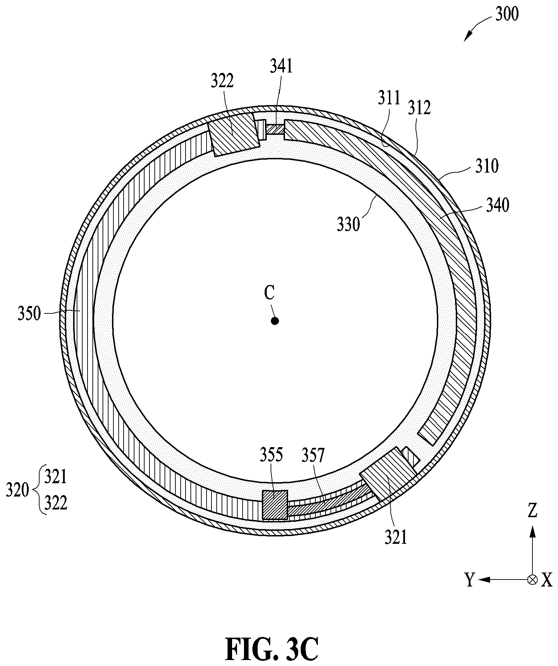

FIG. 3A is a perspective view of an electronic device 300 according to an example embodiment, FIG. 3B is a perspective view of the electronic device 300 according to an example embodiment, and FIG. 3C is a schematic view illustrating a cross-section of the electronic device 300 according to an example embodiment.

Specifically, FIG. 3B is a perspective view of the electronic device 300 of FIG. 3A without a molding member 330, and FIG. 3C is a view illustrating a schematic structure of the electronic device 300 according to an example embodiment.

Referring to FIGS. 3A, 3B, and 3C, an electronic device according to an embodiment (e.g., the electronic device 101 of FIG. 1) may include at least some of a housing 310, a molding member 330, a battery 340, and a substrate 350.

Hereinafter, the description provided above may not be repeated, and it is apparent that a portion of the configuration and structure of the electronic device 300 may be replaced, added, or omitted within a scope easily understandable by one of ordinary skill in the art with reference to the following drawings and descriptions. In addition, at least one component or feature of the embodiments described above may be coupled to the electronic device 300 unless this is technically and clearly infeasible.

In an embodiment, the electronic device 300 may be a wearable device that is wearable on the body of a user. For example, the electronic device 300 may be wearable on a finger, wrist, or arm of a user. The electronic device 300 may be a smart ring, a smart bracelet, or a smart armlet.

Hereinafter, the electronic device 300 according to various embodiments of the disclosure will be described using the electronic device 300 that is a smart ring wearable on a finger of a user as an example. However, this is merely an example, and the actual implementation of the electronic device 300 is not limited thereto. For example, the electronic device 300 may be a wireless communication device such as a smartphone, or may be a tablet personal computer (PC), a laptop, a display device, a head mounted display (HMD), a wireless headset, or a home electronic device.

In an embodiment, the housing 310 may form an exterior of the electronic device 300. Alternatively, the housing 310 may accommodate components of the electronic device 300 therein. The housing 310 may have various shapes and structures depending on the purpose and function of the electronic device 300.

In an embodiment, the housing 310 may have an annular structure. For example, in the electronic device 300 that is a smart ring, the housing 310 may have a ring shape that is detachably attached to a finger of a user.

In an embodiment, the housing 310 may include an inner circumferential surface 311 facing an inner center C and an outer circumferential surface 312 opposite the inner circumferential surface 311. The molding member 330 may be combined with the inner circumferential surface 311 of the housing 310.

In an embodiment, the molding member 330 may be a component formed of a different material from the housing 310 that is combined with the housing 310. For example, in the electronic device 300 that is a wearable device, the molding member 330 may be an element that comes into contact with the user's body.

In an embodiment, the components of the electronic device 300 may be disposed between the housing 310 and the molding member 330. The molding member 330 may support or protect internal components. The molding member 330 may serve as an inner case or an inner cover of the electronic device 300.

In an embodiment, the molding member 330 may be filled between the housing 310 and the substrate 350. For example, with the components such as the substrate 350 and the battery 340 disposed in the housing 310, the molding member 330 may be filled in the housing 310 and cured. The molding member 330 may support the housing 310 and other components, and protect the components of the electronic device 300 from external impact. However, this is merely an example, and the molding member 330 may be combined with the housing 310.

In an embodiment, the substrate 350 may be disposed to face the inner circumferential surface 311 of the housing 310. The substrate 350 may be disposed in an accommodation groove 315 of the housing 310. The accommodation groove 315 may be formed on the inner circumferential surface 311 of the housing 310 to accommodate the substrate 350. The substrate 350 may be disposed to be spaced apart from the housing 310 at a predetermined distance.

In an embodiment, the substrate 350 may control the driving of the electronic device 300. A plurality of electrical elements 355 may be disposed on the substrate 350. For example, the electrical elements 355 of the substrate 350 may include at least some of a processor (e.g., the processor 120 of FIG. 1), a memory (e.g., the memory 130 of FIG. 1), and a communication module (e.g., the communication module 190 of FIG. 1) of the electronic device 300.

In an embodiment, the battery 340 (e.g., the battery 189 of FIG. 1) may provide power for driving the electronic device 300. The battery 340 may be disposed in the housing 310 to face the substrate 350. The battery 340 may be connected to the substrate 350 via a battery terminal 341 so as to supply power to the electrical elements 355 of the substrate 350.

In an embodiment, the housing 310 may be formed of a conductive material. For example, the housing 310 may be formed of one continuous conductive material. Alternatively, the housing 310 may be formed by combining two or more materials, and at least one of the two or more materials may be a conductive material.

In an embodiment, the housing 310 may transmit and receive wireless communication signals from the outside. The housing 310 may be electrically or communicatively connected to the substrate 350 through a protruding area 320.

In an embodiment, the housing 310 may include the protruding area 320. The protruding area 320 may be electrically connected to the substrate 350. The protruding area 320 may be a protrusion formed to protrude from the inner circumferential surface 311 of the housing 310 toward the substrate 350.

In an embodiment, the protruding area 320 may be electrically connected to the substrate 350 by a bonding member 365. The bonding member 365 may be a soldering member and may connect and fix the substrate 350 and the protruding area 320.

For example, as illustrated in FIG. 3C, a conductive member 357 formed of a conductive pattern may be provided on the substrate 350. Alternatively, the protruding area 320 may be connected to at least one of the electrical elements 355 of the substrate 350 by the bonding member 365 and/or the conductive member 357.

In an embodiment, the molding member 330 may be filled between the substrate 350 and the housing 310, and the protruding area 320 may penetrate the molding member 330 to be connected to the substrate 350. The protruding area 320 may provide connection stability between the substrate 350 and the housing 310.

In an embodiment, the housing 310 may serve as an antenna receiver and/or transmitter of the electronic device 300. The electronic device 300 may include a wireless communication module (e.g., the wireless communication module 192 of FIG. 1 or the wireless communication module 192 of FIG. 2), and may transmit and receive wireless communication through an antenna module (e.g., the antenna module 197 of FIG. 1 or the antenna module 197 of FIG. 2). The housing 310 may be a partial configuration of the antenna module 197.

In an embodiment, the housing 310 formed of a conductive material may be electrically connected to a wireless communication module of the substrate 350 and may function as a partial configuration of an antenna module by transmitting and receiving wireless communication signals from the outside.

For example, when the electronic device 300 is a small or portable device, the electronic device 300 may have limitations in the spatial arrangement of the antenna module, and the communication performance or communication distance of the electronic device 300 may be limited. When a radio-frequency (RF) intensity of the electronic device 300 is increased to improve the communication performance and the communication distance, the consumption of the battery 340 may increase and the usage time of the electronic device 300 may decrease.

In an embodiment of the disclosure, the electronic device 300 may utilize the housing 310 formed of a conductive material as the antenna module 197 of the electronic device 300, thereby improving the communication performance and the communication distance of the electronic device 300 and providing efficiency in the spatial design of the electronic device 300.

In an embodiment, the housing 310 may include a plurality of protruding areas 320. The plurality of protruding areas 320 may include a first protruding area 321 and a second protruding area 322.

In an embodiment, the first protruding area 321 may be utilized as a feeding terminal, and the second protruding area 322 may be utilized as a ground terminal. The disclosure is not limited thereto, and the first protruding area 321 and the second protruding area 322 may be utilized as various terminals. For example, the first protruding area 321 may be utilized as a ground terminal, and the second protruding area 322 may be utilized as a feeding terminal. Alternatively, the first protruding area 321 and the second protruding area 322 may be utilized as ground terminals. Alternatively, the first protruding area 321 and the second protruding area 322 may be utilized as feeding terminals.

In an embodiment, the first protruding area 321 and the second protruding area 322 may be provided to be spaced apart from each other, and a feature of a communication signal transmitted and received by the housing 310 may be set through a distance or a path from the first protruding area 321 to the second protruding area 322.

In an embodiment, the plurality of protruding areas 320 may include at least one of the first protruding area 321 and the second protruding area 322 in plurality. For example, the electronic device 300 may include a plurality of first protruding areas 321 that are feeding terminals, and the electronic device 300 may improve a receivable communication range through the plurality of feeding terminals.

Hereinafter, based on the description of the electronic device 300 provided above, the electronic device 300 including the protruding area 320 and structures and configurations associated therewith according to various embodiments will be described. In illustrating the electronic device 300, some components (e.g., the molding member 330) of the electronic device 300 are omitted, and the components may also be omitted in actual implementation.

In addition, the embodiments described below are merely examples, and the actual implementation of the electronic device 300 is not limited thereto, and at least some components of a plurality of embodiments may be omitted or added, components of the plurality of embodiments may be replaced, or the plurality of embodiments may be merged.

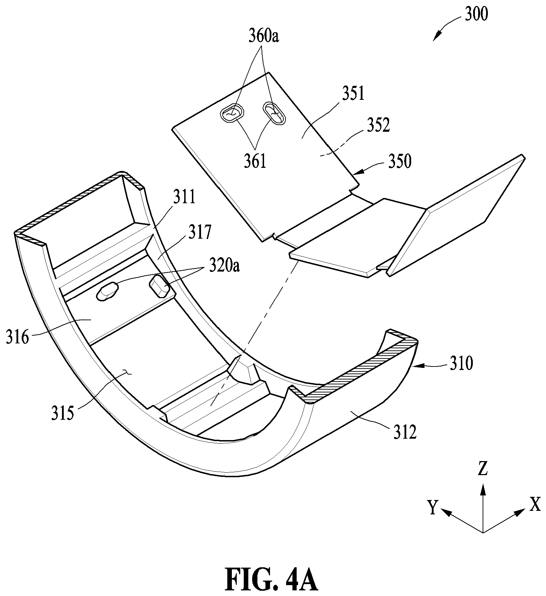

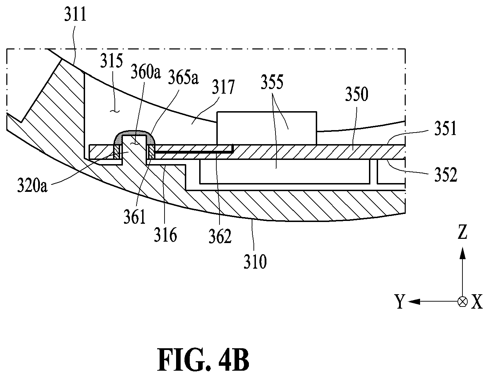

FIG. 4A is an exploded perspective view of the electronic device 300 according to an example embodiment, and FIG. 4B is a cross-sectional view of the electronic device 300 according to an example embodiment.

Specifically, FIG. 4A is an exploded perspective view omitting a bonding member 365a and illustrating the housing 310 and the substrate 350 separately, and FIG. 4B is a cross-sectional view illustrating a state in which the substrate 350 is coupled to the housing 310.

Referring to FIGS. 4A and 4B, the electronic device 300 according to an embodiment may include at least some of a protruding area 320a (e.g., the protruding area 320 of FIGS. 3B and 3C), an opening 360a, and the bonding member 365a (e.g., the bonding member 365 of FIG. 3B).

Hereinafter, the description provided above may not be repeated, and it is apparent that a partial configuration or structure of the electronic device 300 including the housing 310 provided with the protruding area 320a may be replaced, added, or omitted within a scope easily understandable by one of ordinary skill in the art with reference to the following drawings and descriptions. In addition, at least one component or feature of the various embodiments described above may be combined with the electronic device 300 including the housing 310 provided with the protruding area 302a unless technically and clearly infeasible.

In an embodiment, the accommodation groove 315 of the housing 310 may include a bottom surface 316 and a side surface 317. The bottom surface 316 may be one surface facing an inner center (e.g., the inner center C of FIGS. 3A, 3B, and 3C) of an annular structure of the housing 310. The side surface 317 may be at least one surface extending from the bottom surface 316 toward the inner center C of the housing 310. The substrate 350 may be surrounded by the bottom surface 316 and the side surfaces 317 and may be accommodated in the accommodation groove 315.

In an embodiment, the protruding area 320a may be provided on the bottom surface 316 of the accommodation groove 315. For example, as illustrated in FIG. 4A, the protruding area 320a may be formed to protrude from the bottom surface 316 of the accommodation groove 315 in a direction facing the substrate 350.

In an embodiment of the disclosure, since the protruding area 320a is formed to protrude from the bottom surface 316, the housing 310 and the substrate 350 may be connected easily and simply in the manufacturing process of the electronic device 300, and the electronic device 300 may provide the connection stability between the housing 310 and the substrate 350.

In an embodiment, the protruding area 320a may be integrally formed with the housing 310. The protruding area 320a may be formed during a molding or injection process of the housing 310. Alternatively, the protruding area 320a may be formed on the inner circumferential surface 311 of the housing 310 through cutting processing.

In an embodiment of the disclosure, since the protruding area 320a is formed to protrude from the bottom surface 316 integrally with the housing 310, a separate connection terminal (not shown) for connecting the housing 310 and the substrate 350 may be omitted, and the housing 310 and the substrate 350 may be stably connected.

In an embodiment, the substrate 350 may include a first surface 351 facing the inner center (e.g., the inner center C of FIGS. 3A, 3B, and 3C) of the housing 310, and a second surface 352 opposite the first surface 351. Although not shown in FIG. 4A, the electrical elements 355 may be disposed on the first surface 351 and/or the second surface 352 of the substrate 350 as shown in FIG. 4B.

In an embodiment, the substrate 350 may include the opening 360a for accommodating the protruding area 320a. The opening 360a may be formed by penetrating in a direction of the second surface 352 from the first surface 351. The protruding area 320a may be disposed to penetrate the opening 360a of the substrate 350. The protruding area 320a may be bonded with the substrate 350 by soldering by the bonding member 365a.

In an embodiment, the substrate 350 may include a substrate terminal 361. The substrate terminal 361 may be electrically connected to the protruding area 320a through the bonding member 365a. The substrate terminal 361 may surround the opening 360a or may be disposed adjacent to the opening 360a.

In an embodiment, the substrate 350 may include a connecting line 362. The connecting line 362 may be electrically connected to the substrate terminal 361 and the electrical elements 355. Through the connecting line 362, the electrical elements 355 may be electrically connected to the protruding area 320a.

In an embodiment, when the plurality of protruding areas 320a is formed, the substrate 350 may include the plurality of openings 360a. Each of the plurality of openings 360a may accommodate each of the plurality of protruding areas 320a.

In an embodiment of the disclosure, the protruding area 320a and the opening 360a may provide the connection stability between the housing 310 and the substrate 350. In addition, in the manufacturing process of the electronic device 300, the protruding area 320a may be disposed in the opening 360a so that the housing 310 and the substrate 350 are assembled, thereby providing convenience in manufacturing the electronic device 300 and improving the yield.

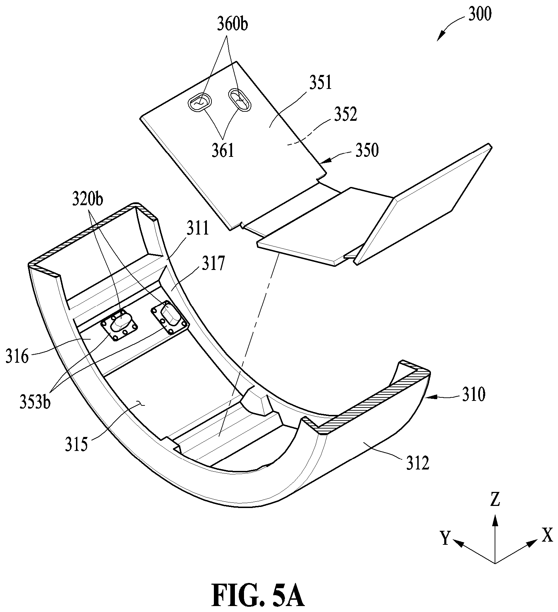

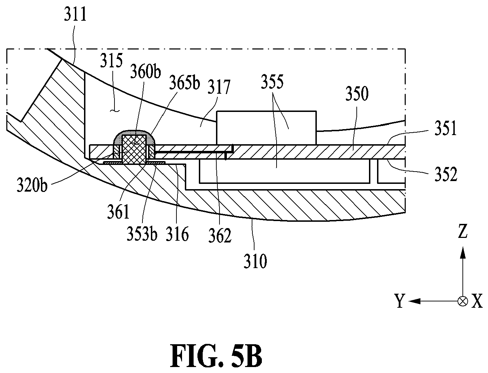

FIG. 5A is an exploded perspective view of the electronic device 300 according to an example embodiment, and FIG. 5B is a cross-sectional view of the electronic device 300 according to an example embodiment.

Specifically, FIG. 5A is an exploded perspective view omitting the bonding member 365a and illustrating the housing 310 and the substrate 350 separately, and FIG. 5B is a cross-sectional view illustrating a state in which the substrate 350 is coupled to the housing 310.

Referring to FIGS. 5A and 5B, the electronic device 300 according to an embodiment may include at least some of a protruding area 320b (e.g., the protruding area 320 of FIGS. 3B and 3C), a connecting member 353b, an opening 360b (e.g., the opening 360a of FIGS. 4A and 4B), and a bonding member 365b (e.g., the bonding member 365 of FIG. 3B and FIG. 3C).

Hereinafter, the description provided above may not be repeated, and it is apparent that a partial configuration or structure of the electronic device 300 including the housing 310 provided with the protruding area 320b may be replaced, added, or omitted within a scope easily understandable by one of ordinary skill in the art with reference to the following drawings and descriptions. In addition, at least one component or feature of the various embodiments described above may be combined with the electronic device 300 including the housing 310 provided with the protruding area 302b unless technically and clearly infeasible.

In an embodiment, the protruding area 320b may be coupled to the housing 310 and may be electrically connected to the housing 310. The protruding area 320b may be a "protruding member" or "connecting terminal" formed as a separate body from the housing 310. The protruding area 320b may have a protrusion shape extending from the inner circumferential surface 311 of the housing 310 toward the substrate 350.

In an embodiment, the protruding area 320b may be coupled to the housing 310 by the connecting member 353b. The connecting member 353b may include an adhesive material to bond the protruding area 320b to the housing 310. Alternatively, the connecting member 353b may be structurally coupled to the housing 310 to secure the protruding area 320b to the housing 310.

In an embodiment, the substrate 350 may include a first surface 351 facing the inner center (e.g., the inner center C of FIGS. 3A, 3B, and 3C) of the housing 310, and a second surface 352 opposite the first surface 351. Although not shown in FIG. 5A, the electrical elements 355 may be disposed on the first surface 351 and/or the second surface 352 of the substrate 350 as shown in FIG. 5B.

In an embodiment, the substrate 350 may include the opening 360b for accommodating the protruding area 320b. The opening 360b may be formed by penetrating in a direction of the second surface 352 from the first surface 351. The protruding area 320b may be disposed to penetrate the opening 360b of the substrate 350. The protruding area 320b may be bonded to the substrate 350 by soldering by the bonding member 365b.

In an embodiment, the substrate 350 may include a substrate terminal 361. The substrate terminal 361 may be electrically connected to the protruding area 320b through the bonding member 365b. The substrate terminal 361 may surround the opening 360b or may be disposed adjacent to the opening 360b.

In an embodiment, the substrate 350 may include a connecting line 362. The connecting line 362 may be electrically connected to the substrate terminal 361 and the electrical elements 355. Through the connecting line 362, the electrical elements 355 may be electrically connected to the protruding area 320b.

In an embodiment, the protruding area 320b may formed of a different material from the housing 310. For example, the housing 310 may be formed of a material that is difficult to bonded by soldering (e.g., titanium). Alternatively, since the housing 310 is exposed to the outside, the housing 310 may be formed of a material that is corrosion-resistant and durable or has low electrical conductivity.

In an embodiment of the disclosure, since the protruding area 320b is formed of a different material from the housing 310, the housing 310 may contain a functional material, and the protruding area 320b formed of a material different therefrom may implement the electrical connection between the substrate 350 and the housing 310.

In the drawings, it is illustrated that the protruding area 320b is disposed on the bottom surface 316 of the accommodation groove 315, but in actual implementation, embodiments are not limited thereto, and the protruding area 320b may be provided on the side surface 317 of the accommodation groove 315 or outside the accommodation groove 315. The description of the protruding area 320b formed of a material different from the housing 310 may also be applied to the protruding area 320 of various embodiments described above or to be described below.

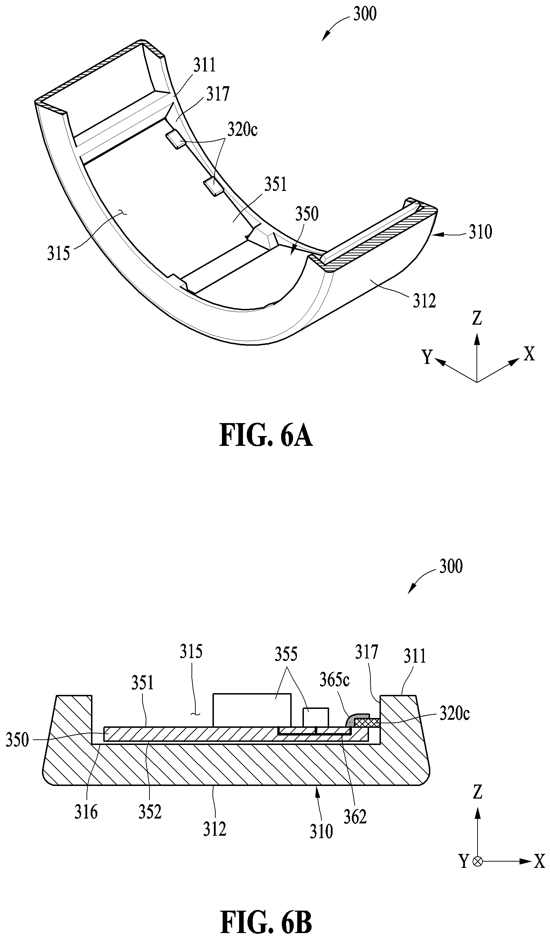

FIG. 6A is a perspective view of the electronic device 300 according to an example embodiment, and FIG. 6B is a cross-sectional view of the electronic device 300 according to an example embodiment.

For example, FIG. 6A is a perspective view omitting the bonding member 365c and illustrating the housing 310 and the substrate 350 separately, and FIG. 6B is a cross-sectional view illustrating a state in which the substrate 350 is coupled to the housing 310.

Referring to FIGS. 6A and 6B, the electronic device 300 according to an embodiment may include at least some of a protruding area 320c (e.g., the protruding area 320 of FIGS. 3B and 3C) and the bonding member 365c (e.g., the bonding member 365 of FIG. 3B).

Hereinafter, the description provided above may not be repeated, and it is apparent that a partial configuration or structure of the electronic device 300 including the housing 310 provided with the protruding area 320c may be replaced, added, or omitted within a scope easily understandable by one of ordinary skill in the art with reference to the following drawings and descriptions. In addition, at least one component or feature of the various embodiments described above may be combined with the electronic device 300 including the housing 310 provided with the protruding area 320c unless technically and clearly infeasible.

In an embodiment, the accommodation groove 315 of the housing 310 may include a bottom surface 316 and a side surface 317. The bottom surface 316 may be one surface facing an inner center (e.g., the inner center C of FIGS. 3A, 3B, and 3C) of an annular structure of the housing 310. The side surface 317 may be at least one surface extending from the bottom surface 316 toward the inner center C of the housing 310. The substrate 350 may be surrounded by the bottom surface 316 and the side surfaces 317 and may be accommodated in the accommodation groove 315.

In an embodiment, the protruding area 320c may be provided on the side surface 317 of the accommodation groove 315. For example, as illustrated in FIG. 6A, the protruding area 320c may be formed to protrude from the side surface 317 of the accommodation groove 315 in a direction facing the substrate 350.

In an embodiment, the substrate 350 may include a first surface 351 facing the inner center C of the housing 310, and a second surface 352 opposite the first surface 351. Although not shown in FIG. 6A, the electrical elements 355 may be disposed on the first surface 351 and/or the second surface 352 of the substrate 350 as shown in FIG. 6B.

In an embodiment, the substrate 350 may include a connecting line 362. The connecting line 362 may be electrically connected to the bonding member 365c and the electrical elements 355. Through the connecting line 362, the electrical elements 355 may be electrically connected to the protruding area 320c.

In an embodiment, the protruding area 320c may be disposed to face the first surface 351 of the substrate 350. The protruding area 320c may be bonded to the first surface 351 of the substrate 350 by soldering by the bonding member 365c.

In an embodiment of the disclosure, since the protruding area 320c is formed to protrude from the side surface 317, an opening (e.g., the opening 360a of FIGS. 4A and 4B) of the substrate 350 may be omitted and space efficiency in the design of the substrate 350 may be provided. In addition, the housing 310 and the substrate 350 may be connected easily and simply in the manufacturing process of the electronic device 300, and the electronic device 300 may provide the connection stability between the housing 310 and the substrate 350.

In an embodiment, the protruding area 320c may be integrally formed with the housing 310. The protruding area 320c may be formed during a molding or injection process of the housing 310. Alternatively, the protruding area 320c may be formed on the inner circumferential surface 311 of the housing 310 through cutting processing.

In an embodiment of the disclosure, since the protruding area 320c is formed to protrude from the side surface 317 integrally with the housing 310, a separate connection terminal (not shown) for connecting the housing 310 and the substrate 350 may be omitted, and the housing 310 and the substrate 350 may be stably connected. However, embodiments are not limited thereto, and the protruding area 320c may be formed of a material different from the housing 310, and may be coupled to the housing 310 to be electrically connected to the housing 310.

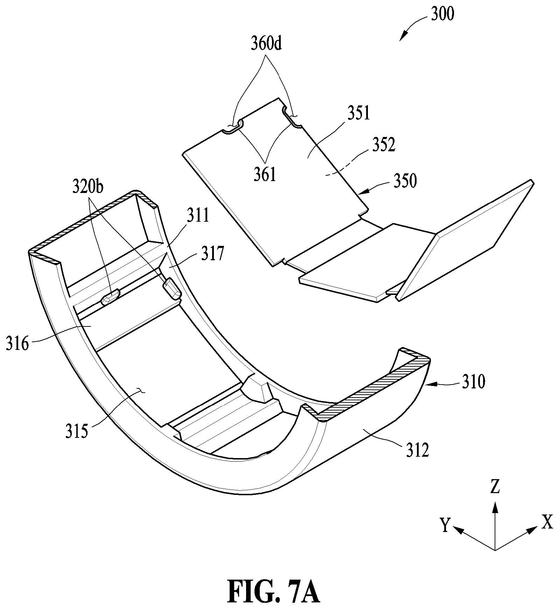

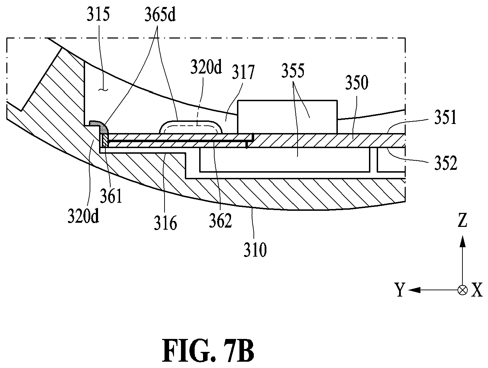

FIG. 7A is an exploded perspective view of the electronic device 300 according to an example embodiment, and FIG. 7B is a cross-sectional view of the electronic device 300 according to an example embodiment.

For example, FIG. 7A is an exploded perspective view omitting the bonding member 365 and illustrating the housing 310 and the substrate 350 separately, and FIG. 7B is a cross-sectional view illustrating a state in which the substrate 350 is coupled to the housing 310.

Referring to FIGS. 7A and 7B, the electronic device 300 according to an embodiment may include at least some of a protruding area 320d (e.g., the protruding area 320 of FIGS. 3B and 3C), connecting groove 360d, and a bonding member 365d (e.g., the bonding member 365 of FIG. 3B).

Hereinafter, the description provided above may not be repeated, and it is apparent that a partial configuration or structure of the electronic device 300 including the housing 310 provided with the protruding area 320d may be replaced, added, or omitted within a scope easily understandable by one of ordinary skill in the art with reference to the following drawings and descriptions. In addition, at least one component or feature of the embodiments described above may be combined with the electronic device 300 including the housing 310 provided with the protruding area 320d unless technically and clearly infeasible.

In an embodiment, the accommodation groove 315 of the housing 310 may include a bottom surface 316 and a side surface 317. The bottom surface 316 may be one surface facing an inner center (e.g., the inner center C of FIGS. 3A, 3B, and 3C) of an annular structure of the housing 310. The side surface 317 may be at least one surface extending from the bottom surface 316 toward the inner center C of the housing 310. The substrate 350 may be surrounded by the bottom surface 316 and the side surfaces 317 and may be accommodated in the accommodation groove 315.

In an embodiment, the protruding area 320d may be provided on the bottom surface 316 and the side surface 317 of the accommodation groove 315. For example, as illustrated in FIG. 7A, the protruding area 320d may be formed to protrude from the bottom surface 316 and the side surface 317 of the accommodation groove 315 in a direction facing the substrate 350.

In an embodiment of the disclosure, since the protruding area 320d is formed to protrude from the bottom surface 316 and the side surface 317, the housing 310 and the substrate 350 may be connected easily and simply in the manufacturing process of the electronic device 300, and the electronic device 300 may provide the connection stability between the housing 310 and the substrate 350.

In an embodiment, the protruding area 320d may be integrally formed with the housing 310. The protruding area 320d may be formed during a molding or injection process of the housing 310. Alternatively, the protruding area 320d may be formed on the inner circumferential surface 311 of the housing 310 through cutting processing.

In an embodiment of the disclosure, since the protruding area 320d is formed to protrude from the bottom surface 316 and the side surface 317 integrally with the housing 310, a separate connection terminal (not shown) for connecting the housing 310 and the substrate 350 may be omitted, and the housing 310 and the substrate 350 may be stably connected. However, embodiments are not limited thereto, and the protruding area 320d may be formed of a material different from the housing 310, and may be coupled to the housing 310 to be electrically connected to the housing 310.

In an embodiment, the substrate 350 may include a first surface 351 facing the inner center C of the housing 310, and a second surface 352 opposite the first surface 351. Although not shown in FIG. 7A, the electrical elements 355 may be disposed on the first surface 351 and/or the second surface 352 of the substrate 350 as shown in FIG. 7B.

In an embodiment, the substrate 350 may include the connecting groove 360d that is grooved inwardly of the substrate 350 corresponding to the protruding area 320d. For example, the connecting groove 360d may have a shape that is grooved from an edge surface (or a surface facing the side surface 317 of the accommodation groove 315) which connects the first surface 351 and the second surface 352 of the substrate 350 toward the center of the substrate 350.

In an embodiment, the substrate 350 may include a substrate terminal 361. The substrate terminal 361 may be electrically connected to the protruding area 320d through the bonding member 365d. The substrate terminal 361 may surround the connecting groove 360d or may be disposed adjacent to the connecting groove 360d.

In an embodiment, the substrate 350 may include a connecting line 362. The connecting line 362 may be connected to the substrate terminal 361 and the electrical elements 355. Through the connecting line 362, the electrical elements 355 may be electrically connected to the protruding area 320d.

In an embodiment, the protruding area 320d may be disposed in the connecting groove 360d of the substrate 350 and may be bonded to the substrate 350 by soldering. For example, the protruding area 320d may be disposed to penetrate the connecting groove 360d of the substrate 350 and may be bonded to the substrate 350 by soldering by the bonding member 365d.

In an embodiment of the disclosure, the protruding area 320d is formed to protrude from the bottom surface 316 and the side surface 317, so that the substrate 350 and the protruding area 320d may be connected through the connecting groove 360d provided in an edge area of the substrate 350. An opening (e.g., the opening 360a of FIGS. 4A and 4B) of the substrate 350 may be omitted by the connecting groove 360d, and thus, the space efficiency in the design of the substrate 350 may be provided.

In an embodiment, when the plurality of protruding areas 320d is formed, the substrate 350 may include the plurality of connecting grooves 360d. Each of the plurality of connecting grooves 360d may accommodate each of the plurality of protruding areas 320d.

In an embodiment of the disclosure, the protruding area 320d and the connecting groove 360d may provide the connection stability between the housing 310 and the substrate 350. In addition, in the manufacturing process of the electronic device 300, the protruding area 320d may be disposed in the connecting groove 360d so that the housing 310 and the substrate 350 are assembled, thereby providing convenience in manufacturing the electronic device 300 and improving the yield.

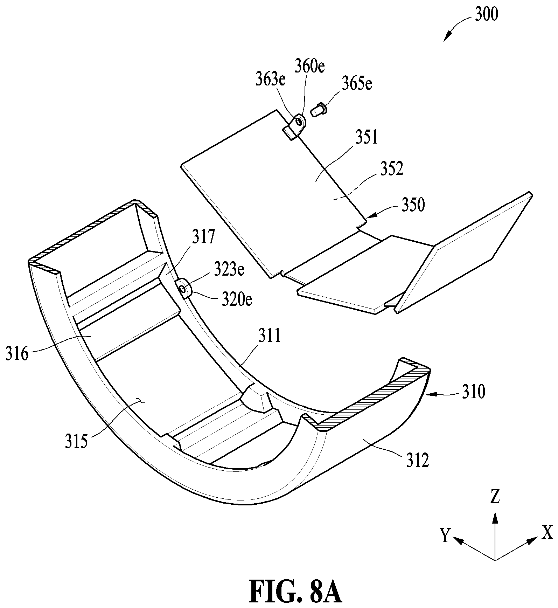

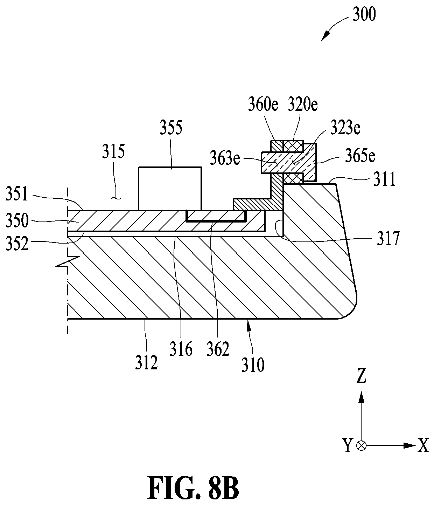

FIG. 8A is an exploded perspective view of the electronic device 300 according to an example embodiment, and FIG. 8B is a cross-sectional view of the electronic device 300 according to an example embodiment.

For example, FIG. 8A is an exploded perspective view illustrating the housing 310, the substrate 350, and a fixing member 365e separately, and FIG. 8B is a cross-sectional view illustrating a state in which the substrate 350 is coupled to the housing 310.

Referring to FIGS. 8A and 8B, the electronic device 300 according to an embodiment may include at least some of a protruding area 320e (e.g., the protruding area 320 of FIGS. 3B and 3C), a fastening member 360e, and the fixing member 365e.

Hereinafter, the description provided above may not be repeated, and it is apparent that a partial configuration or structure of the electronic device 300 including the housing 310 provided with the protruding area 320e may be replaced, added, or omitted within a scope easily understandable by one of ordinary skill in the art with reference to the following drawings and descriptions. In addition, at least one component or feature of the embodiments described above may be combined with the electronic device 300 including the housing 310 provided with the protruding area 320e unless technically and clearly infeasible.

In an embodiment, the accommodation groove 315 of the housing 310 may include a bottom surface 316 and a side surface 317. The bottom surface 316 may be one surface facing an inner center (e.g., the inner center C of FIGS. 3A, 3B, and 3C) of an annular structure of the housing 310. The side surface 317 may be at least one surface extending from the bottom surface 316 toward the inner center C of the housing 310. The substrate 350 may be surrounded by the bottom surface 316 and the side surfaces 317 and may be accommodated in the accommodation groove 315.

In an embodiment, the protruding area 320e may be provided outside the accommodation groove 315. For example, as illustrated in FIG. 8A, the protruding area 320e may be formed to protrude from the inner circumferential surface 311 of the housing 310 or an outer boundary of the accommodation groove 315 of the housing 310 toward the inner center C of the housing 310.

In an embodiment of the disclosure, since the protruding area 320e is formed to protrude from the outside of the accommodation groove 315 of the housing 310, the housing 310 and the substrate 350 may be connected easily and simply in the manufacturing process of the electronic device 300, and the electronic device 300 may provide the connection stability between the housing 310 and the substrate 350.

In an embodiment, the protruding area 320e may be integrally formed with the housing 310. The protruding area 320e may be formed during a molding or injection process of the housing 310. Alternatively, the protruding area 320e may be formed on the inner circumferential surface 311 of the housing 310 through cutting processing.

In an embodiment of the disclosure, since the protruding area 320e is formed to protrude integrally with the housing 310, a separate connection terminal (not shown) for connecting the housing 310 and the substrate 350 may be omitted, and the housing 310 and the substrate 350 may be stably connected. However, embodiments are not limited thereto, and the protruding area 320e may be formed of a material different from the housing 310, and may be coupled to the housing 310 to be electrically connected to the housing 310.

In an embodiment, the substrate 350 may include a first surface 351 facing the inner center C of the housing 310, and a second surface 352 opposite the first surface 351. Although not shown in FIG. 8A, the electrical elements 355 may be disposed on the first surface 351 and/or the second surface 352 of the substrate 350 as shown in FIG. 8B.

In an embodiment, the fastening member 360e may be coupled to the first surface 351 of the substrate 350 and may be electrically connected to the substrate 350. The fastening member 360e may be a partial configuration or a partial area of the substrate 350. Since the protruding area 320e extends from the housing 310 in a direction facing the fastening member 360e, the protruding area 320e may protrude and extend toward the substrate 350.

In an embodiment, the fastening member 360e may be formed to extend from the substrate 350 so as to face the protruding area 320e. For example, the fastening member 360e may extend in a direction of the inner center C from the first surface 351 of the substrate 350 to face the protruding area 320e.

In an embodiment, the protruding area 320e may include a first fastening hole 323e. The fastening member 360e may include a second fastening hole 363e. The first fastening hole 323e and the second fastening hole 363e may be arranged to face each other in a state in which the substrate 350 is seated on the housing 310.

In an embodiment, the fixing member 365e may fix the fastening member 360e and the protruding area 320e. The fixing member 365e may be disposed to simultaneously penetrate the first fastening hole 323e and the second fastening hole 363e, and may fix the protruding area 320e and the fastening member 360e. The fixing member 365e may be formed of a conductive material and may electrically connect the protruding area 320e and the fastening member 360e.

However, embodiments are not limited thereto, and the fixing member 365e may be a bonding member (e.g., the bonding member 365 of FIG. 3B). The fixing member 365e may be bonded to the protruding area 320e and the fastening member 360e by soldering, so that the protruding area 320e and the fastening member 360e may be mutually fixed and electrically connected. At least a portion of the first fastening hole 323e and the second fastening holes 363e may be omitted.

In an embodiment, the protruding area 320e may be disposed in the connecting groove 360d of the substrate 350 and may be bonded to the substrate 350 by soldering. For example, the protruding area 320e may be disposed to penetrate the connecting groove 360d of the substrate 350 and may be bonded to the substrate 350 by soldering by the bonding member 365.

In an embodiment, the substrate 350 may include a connecting line 362. The connecting line 362 may be connected to the fastening member 360e and the electrical elements 355. Through the connecting line 362, the electrical elements 355 may be electrically connected to the protruding area 320e.

In an embodiment of the disclosure, the electronic device 300 may connect the protruding area 320e to the substrate 350 through the fastening member 360e and the fixing member 365e. An opening (e.g., the opening 360a of FIGS. 4A and 4B) or a connecting groove (e.g., the connecting groove 360d of FIGS. 7A and 7B) of the substrate 350 may be omitted, and thus, the space efficiency in the design of the substrate 350 may be provided. In addition, since the fastening member 360e may be bonded to the substrate 350 through a post-process after manufacturing the substrate 350, the electronic device 300 may be applied to the substrate 350 with various shapes and structures.

In an embodiment, when the plurality of protruding areas 320e is formed, the electronic device 300 may include the fastening member 360e and the fixing member 365e in plurality. Each of the plurality of fastening members 360e and the plurality of fixing members 365e may be connected to each of the plurality of protruding areas 320e.

In an embodiment of the disclosure, the protruding area 320e, the fastening member 360e, and the fixing member 365e may provide the connection stability between the housing 310 and the substrate 350. In addition, in the manufacturing process of the electronic device 300, the protruding area 320e and the fastening member 360e are fixed by the fixing member 365e in a state in which the substrate 350 is disposed in the accommodation groove 315 of the housing 310, thereby providing convenience in manufacturing the electronic device 300 and improving the yield.

An electronic device 300 according to an embodiment may include a housing 310 having an annular structure formed of a conductive material, and a substrate 350 spaced apart from and facing an inner circumferential surface 311 of the housing 310. In an embodiment, the housing 310 may include a protruding area 320, 320a, 320b, 320c, 320d, 320e formed to protrude toward the substrate 350 and electrically connected to the substrate 350.

In an embodiment, the electronic device 300 may further include a molding member 330 filled between the housing 310 and the substrate 350. In an embodiment, the protruding area 320, 320a, 320b, 320c, 320d, 320e may be connected to the substrate 350 by penetrating the molding member 330.

In an embodiment, the housing 310 may include an accommodation groove 315 that accommodates the substrate 350. In an embodiment, the accommodation groove 315 may include a bottom surface 316 facing an inner center C of the housing 310 having the annular structure, and a side surface 317 extending from the bottom surface 316 toward the inner center C of the housing 310.

In an embodiment, the protruding area 320a, 320b may be provided on a bottom surface 316 of an accommodation groove 315 of the housing 310.

In an embodiment, the substrate 350 may include an opening 360a, 360b for accommodating the protruding area 320a, 320b. In an embodiment, the protruding area 320a, 320b may be disposed to penetrate the opening 360a, 360b of the substrate 350 and may be bonded to the substrate 350 by soldering.

In an embodiment, the protruding area 320c may be provided on a side surface 317 of an accommodation groove 315 of the housing 310.

In an embodiment, the protruding area 320c may be disposed to face one surface 351 of the substrate 350 facing an inner center C of the housing 310 having the annular structure to be connected to the substrate 350.

In an embodiment, the substrate 350 may include a connecting groove 360d that is grooved inwardly of the substrate 350 corresponding to the protruding area 320d.

In an embodiment, the protruding area 320d may be disposed in the connecting groove 360d of the substrate 350 and may be bonded with the substrate 350 by soldering.

In an embodiment, the protruding area 320e may be provided outside the accommodation groove 315.

In an embodiment, the electronic device 300 may further include a fastening member 360e formed to extend from the substrate 350 so as to face the protruding area 320e, and a fixing member 365e that fixes the fastening member 360e and the protruding area 320e.

In an embodiment, the housing 310 may include the protruding area 320, 320a, 320b, 320c, 320d, 320e in plurality. In an embodiment, the plurality of protruding areas 320, 320a, 320b, 320c, 320d, 320e may include a first protruding area 321 that transmits and receives a wireless communication signal to and from the substrate 350, and a second protruding area 322 that is grounded with the substrate 350. In an embodiment, the plurality of protruding areas 320, 320a, 320b, 320c, 320d, 320e may include at least one of the first protruding area 321 and the second protruding area 322 in plurality.

In an embodiment, the substrate 350 may include a plurality of openings 360a, 360b for accommodating the plurality of protruding areas 320a, 320b, respectively.

In an embodiment, the protruding area 320, 320a, 320c, 320d, 320e may be integrally formed with the housing 310.

In an embodiment, the protruding area 320b may be formed of a different material from the housing 310 and may be coupled to the housing 310 to be electrically connected to the housing 310.

In addition, the electronic device 300 according to an embodiment of the disclosure may include a housing 310 formed of a conductive material, a substrate 350 spaced apart from the housing 310, and a molding member 330 filled between the housing 310 and the substrate 350. In an embodiment, the housing 310 may include a protruding area 320, 320a, 320b, 320c, 320d, 320e formed to protrude toward the substrate 350 by penetrating the molding member 330 and electrically connected to the substrate 350.

In an embodiment, the substrate 350 may include an opening 360a, 360b for accommodating the protruding area 320a, 320b. In an embodiment, the protruding area 320a, 320b may be disposed to penetrate the opening 360a, 360b of the substrate 350 and may be bonded to the substrate 350 by soldering.

In an embodiment, the housing 310 may include the protruding area 320, 320a, 320b, 320c, 320d, 320e in plurality. In an embodiment, the plurality of protruding areas 320, 320a, 320b, 320c, 320d, 320e may include a first protruding area 321 that transmits and receives a wireless communication signal to and from the substrate 350, and a second protruding area 322 that is grounded with the substrate 350.

In an embodiment, the protruding area 320, 320a, 320c, 320d, 320e may be integrally formed with the housing 310.

In an embodiment, the protruding area 320b may be formed of a different material from the housing 310 and may be coupled to the housing 310 to be electrically connected to the housing 310.

While embodiments have been illustrated and described above, the disclosure is not limited to the aforementioned example embodiments. Those skilled in the art should appreciate that various modifications may be made without departing from the subject matter of the disclosure as defined by the appended claims, and also that such modifications are not to be understood individually from the technical spirit or scope of the disclosure.

## Claims

1. An electronic device (300) comprising:
a housing (310) having an annular structure comprising a conductive material; and
a substrate (350) spaced apart from and facing an inner circumferential surface (311) of the housing (310),
wherein the housing (310) comprises a protruding area (320, 320a, 320b, 320c, 320d, 320e) protruding toward the substrate (350) and electrically connected to the substrate (350).

2. The electronic device (300) of claim 1, further comprising:
a molding member (330) filled between the housing (310) and the substrate (350),
wherein the protruding area (320, 320a, 320b, 320c, 320d, 320e) is connected to the substrate (350) by penetrating the molding member (330).

3. The electronic device (300) of claim 1 or 2, wherein
the housing (310) comprises an accommodation groove (315) configured to accommodate the substrate (350), and
the accommodation groove (315) comprises:
a bottom surface (316) facing an inner center (C) of the housing (310) having the annular structure; and
a side surface (317) extending from the bottom surface (316) toward the inner center (C) of the housing (310).

4. The electronic device (300) of any one of claims 1 to 3, wherein
the protruding area (320a, 320b) is provided on a bottom surface (316) of an accommodation groove (315) of the housing (310).

5. The electronic device (300) of any one of claims 1 to 4, wherein
the substrate (350) comprises an opening (360a, 360b) configured to accommodate the protruding area (320a, 320b), and
the protruding area (320a, 320b) is disposed to penetrate the opening (360a, 360b) of the substrate (350) and is bonded to the substrate (350) by soldering.

6. The electronic device (300) of any one of claims 1 to 5, wherein
the protruding area (320c) is provided on a side surface (317) of an accommodation groove (315) of the housing (310).

7. The electronic device (300) of any one of claims 1 to 6, wherein
the protruding area (320c) is disposed to face one surface (351) of the substrate (350) facing an inner center (C) of the housing (310) having the annular structure to be connected to the substrate (350).

8. The electronic device (300) of any one of claims 1 to 7, wherein
the substrate (350) comprises a connecting groove (360d) grooved inwardly of the substrate (350) corresponding to the protruding area (320d), and
the protruding area (320d) is disposed in the connecting groove (360d) of the substrate (350) and is bonded with the substrate (350) by soldering.

9. The electronic device (300) of any one of claims 1 to 8, wherein
the protruding area (320e) is provided outside the accommodation groove (315).

10. The electronic device (300) of any one of claims 1 to 9, further comprising:
a fastening member (360e) formed to extend from the substrate (350) so as to face the protruding area (320e); and
a fixing member (365e) that fixes the fastening member (360e) and the protruding area (320e).

11. The electronic device (300) of any one of claims 1 to 10, wherein the housing (310) comprises a plurality of protruding area (320, 320a, 320b, 320c, 320d, 320e) , and
the plurality of protruding areas (320, 320a, 320b, 320c, 320d, 320e) comprises a first protruding area (321) configured to transmit and receives a wireless communication signal to and from the substrate (350), and a second protruding area (322)grounded with the substrate (350).

12. The electronic device (300) of any one of claims 1 to 11, wherein the plurality of protruding areas (320, 320a, 320b, 320c, 320d, 320e) comprises at least one of the first protruding area (321) and a plurality of second protruding areas (322).

13. The electronic device (300) of any one of claims 1 to 12, wherein the substrate (350) comprises a plurality of openings (360a, 360b) configured to accommodate the plurality of protruding areas (320a, 320b), respectively.

14. The electronic device (300) of any one of claims 1 to 13, wherein the protruding area (320, 320a, 320c, 320d, 320e) is integrally formed with the housing (310).

15. The electronic device (300) of any one of claims 1 to 14, wherein the protruding area (320b) includes a different material from the housing (310) and is coupled to the housing (310) to be electrically connected to the housing (310).
